# NEUE EUROPÄISCHE PATENTSCHRIFT

(11) **EP 2 814 654 B2**
(45) Veröffentlichungstag und Bekanntmachung des Hinweises auf die Entscheidung über den Einspruch: **24.04.2024**
(45) Hinweis auf die Patenterteilung: 29.04.2020
(21) Anmeldenummer: 13706216.2
(22) Anmeldetag: 18.02.2013
(51) Int. Cl.: B29C 45/48, B29C 45/76

(54) **SPRITZGIEßCOMPOUNDER UND VERRFAHREN**
INJECTION MOLDING COMPOUNDER AND METHOD
MÉLANGEUR POUR MOULAGE PAR INJECTION ET PROCÉDÉ

(30) Priorität: 17.02.2012 DE 102012101280
(43) Veröffentlichungstag der Anmeldung: 24.12.2014
(60) Teilanmeldung: 20160097.0
(73) Patentinhaber: Guangdong Yizumi Precision Machinery Co., Ltd., Ronggui Shhunde, Foshan City Guangdong (CN)
(72) Erfinder: PUTSCH, Peter, 06217 Merseburg (DE)
(74) Vertreter: Hoefer & Partner Patentanwälte mbB
(86) Internationale Anmeldenummer: PCT/EP2013/053212
(87) Internationale Veröffentlichungsnummer: WO 2013/121049

(56) Entgegenhaltungen:
- EP-A1- 0 321 742
- EP-A1- 0 806 278
- EP-A1- 1 440 783
- EP-A1- 1 785 253
- EP-A1- 2 050 554
- EP-A1- 2 236 266
- EP-A2- 0 706 873
- EP-B1- 0 169 231
- WO-A1-99/41056
- WO-A1-2009/147227
- DE-A1- 1 529 815
- DE-A1- 2 355 187
- DE-A1- 3 432 263
- DE-A1- 3 840 293
- DE-A1- 10 156 522
- DE-A1- 10 234 228
- DE-A1- 19 611 608
- DE-A1- 19 718 174
- DE-A1-102005 007 102
- DE-A1-102007 012 199
- DE-A1-102007 044 617
- DE-B3-102007 042 808
- DE-C1- 19 646 394
- DE-U1-202009 011 114
- DE-U1-202011 106 715
- JP-A- S5 751 437
- JP-A- 2008 201 137
- US-A- 3 913 796
- Abschlussbericht "Förderprogramm Forschung fur die Umwelt im Bereich Integrierter Umweltschutz in der Kunststoff- und Kautschukindustie"
- Abschlussbericht Institut fur Kunststofftechnik der Univ Stuttgart (Bild 2.1,3.2, 5.12; S.4, 8-10, 59-61,79-80, Tab. 6 2)
- Johannaber / Michaeli. "Handbuch Spritzgießen". Munchen/Wien, Hanser, 2001 (Seiten 1041+1042 Bild 8 46)
- Registratur der DE202011106715 U1
- KraussMaffei-Prospekt "Direktverarbeitung mit der IMC-Baureihe - IMC-Spritzgießcompounder" Ausgabe 10/2001
- KraussMaffei-Prospekt "Direktverarbeitung mit IMC-Spritzgießcompounder" Ausgabe 08/2007

## Beschreibung

Die Erfindung betrifft einen Spritzgießcompounder gemäß dem Oberbegriff des Anspruchs 1, ein entsprechendes Verfahren zur Herstellung eines Spritzgußwerkstücks und ein Computerprogrammprodukt zur Steuerung eines entsprechenden Spritzgießcompounders.

Herkömmlich ist bekannt, verschiedene Ausgangsmaterialien in einem Extruder zu einer homogenen Schmelze zu vermischen also sie zu compoundieren und die Schmelze dann zu granulieren, um sie zu einem späteren Zeitpunkt in einer Spritzgussmaschine zu verwenden. Den Zwischenschritt des Granulierens kann man mit einem bekannten Spritzgießcompounder vermeiden, bei dem die im Compounder oder Extruder hergestellte Kunststoffschmelze unmittelbar der Einspritzeinheit zugeführt wird.

So wird gemäß DE 101 18 486 A1 die im Extruder erzeugte Schmelze in einen von dem Extruder getrennten Kolbenvorratsraum gefördert, um sie anschließend aus dem Kolbenvorratsraum in das Werkstück einzuspritzen.

Die DE 10 2007 042 808 B3 betrifft Spritzeinheit einer Kunststoffspritzgießmaschine, mit einer kontinuierlich betreibbaren Plastifiziereinrichtung, sowie mit einer Einspritzeinrichtung, wobei die Einspritzeinrichtung einen Spritzzylinder aufweist, in dem ein Verdrängungselement zum Einspritzen von Schmelze aus dem Spritzzylinder (20,106) in ein Spritzgießwerkzeug angeordnet und von einer Antriebseinheit axial verfahren werden kann, wobei das Verdrängungselement über ein oder mehrere Verbindungselemente mit der Antriebseinheit verbunden ist, wobei ein erster am vorderen Ende des Spritzzylinders in diesen einmündender Schmelzekanal vorgesehen ist, wobei ein zweiter in einem hinteren Bereich des Spritzzylinders in diesen einmündender Schmelzekanal vorgesehen ist, wobei der erste und der zweite Schmelzekanal wechselweise mit dem Ausgang der Plastifiziereinrichtung verbindbar sind, wobei eines oder mehrere der Verbindungselemente mit der Innenwand des Spritzzylinders ein Puffervolumen zur Aufnahme von Schmelze bildet oder bilden, und wobei das Verdrängungselement ein oder mehrere verschließbare Öffnungen für den Durchfluss von Schmelze aufweist. dadurch gekennzeichnet, dass in dem Spritzzylinder eine mit einer Rückströmsperre ausgestattete Schnecke vorgesehen ist, wobei als Verdrängungselement der Kopf der Schnecke einschließlich der Rückströmsperre vorgesehen ist, wobei die Schnecke ein oder mehrere Schneckengänge aufweist, wobei die Schnecke einen Teil des oder der Verbindungselemente bildet, und dass die Antriebseinheit einen Linear- und einen Drehantrieb für die Schnecke aufweist.

Als Werkstoffe werden thermoplastische Polymere oder Thermosetting-Polymere und Mischungen hiervon verwendet und dabei kommen organische oder anorganische oder faserförmige Füllstoffe oder Keramiken zum Einsatz. Einerseits ist es wichtig, eine gleichmäßige und homogene Durchmischung der Bestandteile zu erzielen. Andererseits sollte keine zu lang anhaltende oder zu umfangreiche Durchmischung durchgeführt werden, da sich hierdurch die Kettenlänge der Polymere reduzieren kann und ferner können faserförmige Füllstoffe brechen und dadurch die Festigkeit des hergestellten Spritzgusswerkstücks reduzieren.

Die Aufgabe der vorliegenden Erfindung ist es, einen Spritzgießcompounder bereitzustellen, bei dem mit möglichst geringem Aufwand eine ausreichend gute Durchmischung und eine möglichst geringe Schädigung der Kunststoffkomponenten durch die Durchmischung auftritt. Ferner soll der apparative Aufbau des Spritzgießcompounders möglichst einfach sein, so dass ggf. bei einem Kunststoffverarbeiter vorhandene Gerätschaften für den Spritzgießcompounder verwendet werden können und so die Investitionskosten gering sein können.

Diese Aufgabe wird durch die Merkmale der unabhängigen Ansprüche gelöst. Bevorzugte Ausführungsformen ergeben sich aus den Unteransprüchen.

Ein Spritzgießcompounder weist einen Extruder mit zumindest einer in einem Extrudergehäuse angeordneten Extruderschnecke auf, eine Einspritzeinheit mit einer in einem Einspritzgehäuse angeordneten Einspritzschnecke, wobei die Einspritzeinheit eine von der Einspritzdüse der Einspritzeinheit bis zu dem davon entfernten Ende der Windungen der Einspritzschnecke definierte Wirklänge aufweist. Diese Wirklänge wird bevorzugt in der vorgeschobenen Position der Einspritzeinheit, also unmittelbar nach dem Einspritzvorgang, definiert. Dabei ist am Einspritzgehäuse ein Schmelzeeinlass vorgesehen, der mit einem Auslass des Extruders verbunden ist, wobei der Schmelzeeinlass weiter als ein Drittel der Wirklänge von der Einspritzdüse entfernt ist. Dabei wird die Richtung der Wirklänge bevorzugt in axialer Richtung der Einspritzeinheit gemessen. Ferner wird bevorzugt die Wirklänge dann betrachtet bzw. definiert, wenn die Einspritzschnecke oder die Schubschnecke in ihrer von der Einspritzdüse entfernten Lage ist. Durch den beschriebenen Aufbau wird die Schmelze, die von dem Extruder erzeugt wurde, zumindest entlang eines Teils der Einspritzschnecke geleitet und wird dort und dabei weiter durchmischt und weiter homogenisiert. Aus diesem Grund kann die Durchmischung und Homogenisierung innerhalb des Extruders lediglich eine Teildurchmischung oder Teilhomogenisierung sein, die für den eigentlichen Spritzprozess noch nicht ausreicht. In der Kombination mit der weiteren Homogenisierung und Durchmischung in der Einspritzeinheit wird die benötigte Materialqualität erzielt. Neben dem systeminhärenten Vorteil eines Spritzgießcompounders, dass ein Compound in einem einzigen Herstellprozess hergestellt und unmittelbar danach verarbeitet wird, ergibt sich der Vorteil einer schonenden Behandlung des Kunststoffmaterials. Es wird nämlich durch die verteilte Bearbeitung der Schmelze eine in der Summe reduzierte mechanische Belastung auf das Material ausgeübt und die Kettenlänge der Kunststoffmoleküle wird so nicht übermäßig reduziert und entsprechend wird auch die Faserlänge von zugefügten Fasern nicht (z.B. durch Faserbruch) reduziert. Wenn die Schmelze über weniger als einem Drittel der Wirklänge innerhalb der Einspritzeinheit geführt wird, kommen die Vorteile der nachfolgenden Durchmischung nicht ausreichend zum Tragen. Auch wird vermieden, dass in der Schmelze nicht aufgeschlossene bzw. nicht ausreichend aufgeschmolzene Kunststoffpartikel vorhanden sind, die zum einen die mechanischen Formteileigenschaften stark reduzieren würden und zum anderen den Dosierprozess destabilisieren würden und Drehmoment- und Dosierzeitschwankungen verursachen und einen Verschleiß an der Schnecke oder der Rückstromsperre führen können.

Bevorzugt weist der Extruder exakt eine Extruderschnecke auf. Aufgrund der Fließstrecke der Schmelze nach dem Verlassen des Extruders entlang zumindest eines Teils der Einspritzschnecke wird die Schmelze dort weiter durchmischt. Dadurch kann es ausreichend sein, dass ein Einschneckenextruder verwendet wird, in dem das Material schonender bearbeitet und dabei zwar auch weniger homogenisiert wird, aber dieser Nachteil wird durch die weitere Durchmischung innerhalb Einspritzeinheit aufgewogen.

Insbesondere kann der Schmelzeeinlass weiter als die Hälfte der Wirklänge von der Einspritzdüse und bevorzugt weiter als zwei Drittel der Wirklänge von der Einspritzdüse entfernt sein. Hiermit wird die Länge definiert, die die Schmelze innerhalb der Einspritzeinheit geleitet wird und ein längerer Schmelzeweg erhöht die Durchmischung und Homogenisierung.

Weiterführend ist eine Steuerung eingerichtet, um den (Dreh-)antrieb der Extruderschnecke in Abhängigkeit von der Zyklusphase eines Einspritzvorgangs ein- und auszuschalten, wobei insbesondere innerhalb des Zyklus des Einspritzvorgangs eine Zeitspanne des aktivierten Antriebs der Extruderschnecke und eine Zeitspanne des nicht-aktivierten Antriebs der Extruderschnecke vorgesehen ist. Gerade bei einem Einschneckenextruder ist es technisch einfach möglich, den Extruder zu starten und zu stoppen und so die zu jedem Zeitpunkt benötigte Schmelze bereitzustellen.

Bevorzugt ist eine Steuerung vorgesehen, um den Antrieb der Extruderschnecke in Abhängigkeit von der Zyklusphase eines Einspritzvorgangs und/oder dem Füllgrad der Einspritzeinheit ein- und auszuschalten. So wird eine funktionelle Kopplung zwischen der Einspritzschnecke und der Extruderschnecke erzielt. In diesem Sinne kann der Fördervolumenstrom der Extruderschnecke an das von der Einspritzeinheit bei der Rückbewegung der Einspritzschnecke aufnehmbare Volumen der Schmelze angepasst werden. Dieses kann als eine einfache Steuerung geschehen, in dem Sinne, dass in Abhängigkeit von Zykluszeitpunkten des Einspritzvorgangs der Extruder ein- (oder aus-) - geschaltet wird. Alternativ oder zusätzlich können an der Einspritzeinheit Sensoren, wie z.B. Drucksensoren, vorgesehen sein, die den Materialbedarf der Einspritzeinheit bestimmen und durch ein zeitgenaues Einschalten (oder Ausschalten) die benötigte Materialmenge von dem Extruder für die Einspritzeinheit bereitstellen lassen. Da die Rohrverbindung zwischen beiden Komponenten zu jedem Zeitpunkt gleichmäßig bzw. komplett mit Schmelze gefüllt ist, wird die Einspritzeinheit exakt mit der Schmelzemenge versorgt, die von dem Extruder bereitgestellt wird.

Insbesondere kann die Steuerung eingerichtet sein, den von dem Extruder geförderten Volumenstrom der Schmelze an die Einspritzeinheit in Abhängigkeit von einer Abweichung eines einspritzphasenabhängig vorgegebenen Soll-Füllgrades zu einem gemessenen Ist-Füllgrad der Einspritzeinheit zu regeln. Dabei sind der Einspritzeinheit für das Befüllen bzw. die Befüllgeschwindigkeit Soll-Parameter vorgegeben, zu welchen Zeitpunkten die Einspritzschnecke an welcher axialen Position sein soll. Das Verschieben der Einspritzschnecke beim Befüllen ergibt sich direkt durch das Fördervolumen des Extruders. Wenn eine Abweichung der Ist-Befüllgeschwindigkeit zu vorgegebenen Sollwerten auftritt, so kann das Fördervolumen der Extruderschnecke im Sinne eines Regelkreises entsprechend angepasst werden.

Insbesondere ist die Steuerung eingerichtet, den Drehantrieb der Einspritzschnecke und den Drehantrieb der Extruderschnecke ein- und auszuschalten, wobei für das Einschalten des Drehantriebs der Extruderschnecke ein zeitlicher Vorlauf oder eine Verzögerung oder insbesondere eine Gleichzeitigkeit gegenüber dem Einschalten des Drehantriebs der Einspritzschnecke oder gegenüber dem Einspritzhub der Einspritzschnecke vorgesehen ist. Bevorzugt ist für das Ausschalten des Drehantriebs der Extruderschnecke ein zeitlicher Vorlauf oder eine Verzögerung oder eine Gleichzeitigkeit gegenüber dem Ausschalten des Antriebs der Einspritzschnecke vorgesehen. Dies umfasst insbesondere auch, dass die Extruderschnecke synchron mit dem Drehantrieb der Einspritzschnecke betrieben werden kann. Aufgrund der Abstimmung der Antriebe von dem Extruder und der Einspritzeinheit kann in Abhängigkeit von dem verwendeten Material oder Compound eine Durchmischung und Verarbeitungsbedingungen erzielt werden, die optimal auf eine kurze Zykluszeit, eine gute Durchmischung und eine geringe Materialbelastung abgestimmt sind.

Bevorzugt sind ein Eingabe- und/oder ein Speichermodul zur Eingabe und/oder zur Speicherung von Betriebsparametern für die Antriebe der Einspritzschnecke und der Extruderschnecke vorgesehen, so dass Einspritzschnecke und die Extuderschnecke in Abhängigkeit von unterschiedlichen Werkstoffen oder Werkstoffkombinationen der Schmelze innerhalb eines Einspritzzyklus mit einem zeitlichen Versatz oder synchron zueinander betreibbar sind. Mit der Eingabeeinheit können gezielt Sollwerteingaben vorgenommen werden und das Speichermodul kann eine Datenbank mit unterschiedlichen vorteilhaften Betriebsbedingungen in Abhängigkeit von unterschiedlichen Werkstoffen aufweisen und es so dem Anwender erleichtern, den Spritzgießcompounder unter bestmöglichen Betriebsbedingungen zu verwenden.

Weiterführend ist zwischen dem Auslass des Extruders und dem Schmelzeeinlass der Einspritzeinheit ein Ventil angeordnet. Dieses ist ein Dreiwegeventil, welches alternativ die Schmelze in die Einspritzeinheit leitet oder an die Umgebung auslässt, und welches zusätzlich den Zustand des geschlossenen Ventils umfasst. Wenn das Ventil ein Überdruckventil ist, so kann ein von dem Extruder bereitgestellter zu hoher Schmelzedruck aus Sicherheitsgründen reduziert werden. Ein steuerbares Ventil kann während der Plastizierphase des Kunststoffs verhindern, dass die erzeugte Schmelze zu früh an die Einspritzeinheit abgegeben wird. Auch lassen sich Extruder und Einspritzeinheit einfach, schnell und sicher entkoppeln.

Insbesondere ist der Ausgang des Extruders über eine druck- oder schmelzendichte Rohrverbindung mit dem Schmelzeeinlass der Einspritzeinheit verbunden und bevorzugt ist der Extruder eingerichtet, durch die Extruderschnecke Kunststoffschmelze zu der Einspritzeinheit zu fördern. Hier werden insbesondere keine weiteren Elemente zur Förderung, wie Kolben, Pumpen, Schnecken, der Nutzung der Schwerkraft oder dergleichen vorgesehen. Ausschließlich aufgrund der Fördereigenschaften des Extruders wird somit die erzeugte Schmelze zu der Einspritzeinheit gefördert und dort in einem Abschnitt der Schnecke eingespeist, in dem der Druck noch nicht sehr hoch ist. Bevorzugt wird die Schmelze somit nicht in den Granulattrichter der Einspritzeinheit eingeleitet.

Insbesondere ist zwischen dem Auslass des Extruders und dem Schmelzeeinlass der Einspritzeinheit für die Schmelze kein über eine Rohrverbindung hinausgehender Puffer vorgesehen und insbesondere ist kein Puffer mit einem veränderlichen Volumen vorgesehen, so dass die in dem Extruder erzeugte Schmelze direkt und unmittelbar an die Einspritzeinheit geleitet wird. Dieser Sachverhalt lässt sich auch folgendermaßen ausdrücken: Die Dauer eines Zyklus der Einspritzvorgänge ist in beliebig viele Zeitpunkte oder Zeitspannen unterteilbar, wobei bei jedem dieser Zeitpunkte der Volumenstrom der Rohrverbindung an jeder seiner Stellen zwischen dem Ausgang des Extruders und der Einspritzeinheit konstant ist. In diesem Sinne ist kein Puffer vorhanden, in dem sich solange die vom Extruder erzeugte Schmelze akkumuliert, bis die Einspritzeinheit diese Schmelze anfordert. Vielmehr fördert der Extruder direkt in die Einspritzeinheit. Dadurch wird die Standzeit der Schmelze in der Rohrverbindung reduziert und eine bessere Fertigungskontrolle erzielt. Auch lässt sich bevorzugt oder alternativ dieser Sachverhalt so ausdrücken, dass bei einem arbeitenden Spritzgießcompounder über mehrere Einspritzzyklen der Füllgrad der Rohrverbindung zwischen dem Ausgang des Extruders und der Einspritzeinheit unabhängig von der Zyklusphase der Einspritzeinheit gleichmäßig mit Schmelze gefüllt ist.

Somit ist zwischen dem Extruder und der Einspritzeinheit lediglich das mit dem Ventil versehene Verbindungsrohr vorgesehen. Dieses Rohr oder dieser Schmelzekanal ist somit so gestaltet, dass keine Schmelze sich in toten Ecken absetzten kann. Dadurch wird verhindert, dass Material crackt und sich Verunreinigungen bilden.

Bei der Verwendung des Spritzgießcompounders ist die Schmelze, die im Extruder entlang der Längsrichtung des Extruders gefördert wird, zumindest eine, vorzugsweise zumindest zwei Umlenkungen, insbesondere jeweils 90° Umlenkungen, vorgesehen, um die Schmelze in Richtung der Längsrichtung der Einspritzeinheit umzulenken. Jede Umlenkung stört das Strömungsprofil innerhalb der Rohrleitung und unterstützt so die Durchmischung, wobei eine Umlenkung schonender für die Kunststoffschmelze ist als eine Durchmischung mit mechanischen Widerständen, Drosseln, Prallwänden oder dergleichen. Das Verhältnis Länge zu Durchmesser der Extruderschnecke beträgt nach einer Ausführungsform mindestens ca. 20. Nach einer weiteren Ausführungsform liegt der Wert bevorzugt zwischen 18 und 40, insbesondere zwischen 20 und 30.

Ein Verfahren zur Herstellung eines Spritzgusswerkstücks mit einem Spritzgießcompounder weist die Schritte auf des Zuführens von einem oder mehreren Spritzgussmaterial/-ien zu einem Extruder, des Herstellens einer Schmelze durch das Schmelzen und/oder das Mischen von dem einen oder den mehreren Spritzgussmaterial(-ein) in dem Extruder, des Zuführens der Schmelze durch eine Einlassöffnung einer Einspritzeinheit in die Einspritzeinheit, des Leitens der Schmelze in der Einspritzeinheit in Richtung zu einer mit einem Spritzgusswerkzeug verbundenen Einspritzdüse, wobei eine Einspritzschnecke der Einspritzeinheit eine über die axiale Länge der Windungen der Einspritzschnecke definierte Windungslänge aufweist und die Einlassöffnung derart an der Einspritzeinheit angeordnet ist, dass die Schmelze zumindest über ein Drittel der Windungslänge entlang den Windungen der Einspritzschnecke geleitet wird. Alternativ zur Windungslänge kann an dieser Stelle auch die oben bereits definierte Wirklänge betrachtet werden.

Bevorzugt ist innerhalb eines Zyklus der Herstellung des Spritzgusswerkstücks eine Phase vorgesehen, in der die Extruderschnecke des Extruders nicht angetrieben wird und bevorzugt wird in der Phase des Nicht-Antriebs der Extruderschnecke die Einspritzschnecke angetrieben. So wird vor und/oder während der Einspritzphase der Schmelze in das Werkzeug die weitere Bereitstellung von Schmelze in dem Extruder gestoppt.

Ein entsprechender Spritzgießcompounder kann hergestellt werden, indem an einer Einspritzeinheit, insbesondere einer handelsüblich erhältlichen Einspritzeinheit, ein Schmelzeeinlass angebracht wird und mit einem Extruder, insbesondere einem handelsüblich erhältlichen Extruder, verbunden wird, wobei insbesondere der Spritzgießcompounder ohne Verwendung von an der Einspritzeinheit vorhandenen Einfüllöffnungen für das Kunststoffgranulat in herkömmlicher Weise weiter verwendbar ist. Die Einfüllöffnung, wie der Granulattrichter kann an der Einspritzeinheit verbleiben, so dass sie alternativ auch konventionell betreibbar ist. So kann ein Kunststoffverarbeitungsunternehmen auf bereits vorhandene Komponenten zurückgreifen und muss dabei nur geringfügige Anpassungsarbeiten vornehmen. Die Einspritzeinheit ist auch nach dem Anbau des Schmelzeeinlasses weiter unabhängig von dem Extruder als eine Einspritzeinheit verwendbar, wenn der Schmelzeeinlass mit bspw. einer Endkappe verschlossen wird.

Ein Computerprogrammprodukt ist in einen Programmspeicher ladbar und weist Programmbefehle auf, um alle Schritte eines der vorstehend aufgeführten Verfahren auszuführen, wenn das Programm ausgeführt wird. So kann der Programmspeicher eine Datenbank aufweisen, die in Abhängigkeit von Materialien oder Materialkombinationen Einstellparameter für den Extruder und die Einspritzeinheit aufweist, um materialabhängig die bestmögliche Steuerung des Spritzgießcompounders zu ermöglichen. Das Computerprogrammprodukt ist bspw. auf einem Computer oder einer SPS lauffähig. Auch kann es auf der Steuerung der Einspritzeinheit oder auf der Steuerung des Extruders oder kombiniert auf beiden miteinander verbundenen Steuerungen ausgeführt werden. Alternativ kann eine Steuerung hierfür verwendet werden, die unabhängig von den genannten Steuerungen ist.

Im Folgenden wird eine bevorzugte Ausführungsform anhand von Figuren beispielhaft beschrieben. Es zeigen:
- Fig. 1: einen schematischen Aufbau eines Spritzgießcompounders mit einer Extruder- und einer Einspritzeinheit,
- Fig. 2: ein schematisches Diagramm der Steuerung des Spritzgießcompounders,
- Fig. 3: ein Diagramm der zeitlichen Abfolge des Antriebs R der Drehantriebe und des Hubs der Einspritzschnecke und
- Fig. 4: eine schematische Darstellung der Schaltstellungen des Dreiwegeventils 30.

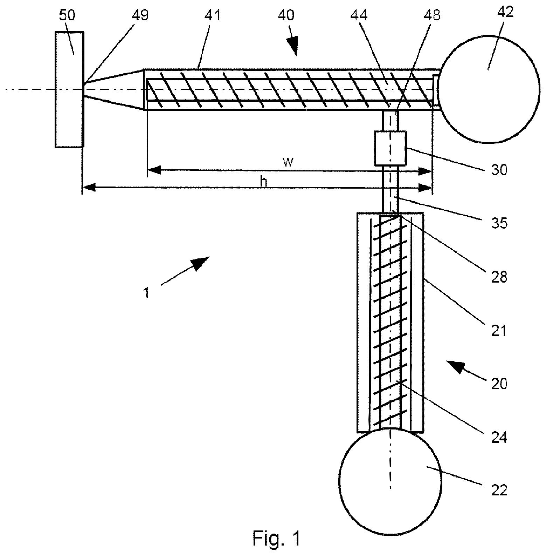

Fig. 1 zeigt einen Spritzgießcompounder 1, bei der eine Extrudereinheit 20 so mit einer Spitzgießeinheit 40 verbunden ist, dass das in dem Extruder 20 verflüssigte Kunststoffmaterial in die Spritzgießeinheit geleitet wird. Der Extruder hat die Aufgabe die Kunststoffschmelze herzustellen und eine gewisse Durchmischung der unterschiedlichen Bestandteile zu erzielen. Dabei muss, wie im Anschluss noch im Detail erläutert wird, die Qualität oder Gleichmäßigkeit der im Extruder erzielten Durchmischung nicht so hoch sein, wie es für den Einspritzvorgang benötigt wird, da die vom Extruder bereitgestellte Schmelze in die Einspritzeinheit gefördert wird und dort eine weitere ergänzende Durchmischung und Erhöhung der Homogenität stattfindet. Der Extruder bzw. die Extrudereinheit wird auch als Compounder bezeichnet und so eingesetzt. Ein Vorteil von einem Spritzgießcompounders besteht darin, dass die in der Einspritzeinheit benötigte Kunststoffmischung in einem zeitgleichen Verfahren in dem Extruder hergestellt wird. Ein herkömmliches Erzeugen eines Compoundgranulats kann entfallen und dadurch wird die Energie des erneuten Aufschmelzens des Granulats eingespart und die Materialbeanspruchung durch die Granulierung und eine damit verbundene Schädigung des Materials wird vermieden.

Das Gehäuse der Einspritzeinheit 40 weist einen Schmelzeeinlass 48 auf, der mit dem Extruderauslass 28, als dem Auslass der Schmelze aus dem Extruder, verbunden ist. Der Schmelzeeinlass 48 ist ein an dem Einspritzgehäuse 41 befestigter, bevorzugt verschweißter Anschluss, an dem ein Rohr druckdicht befestigt werden kann. Als Verbindung zwischen dem Extruderauslass 28 und dem Schmelzeeinlass 48 ist eine Rohrverbindung 35 vorgesehen, die ein Ventil 30 aufweist. Die Einspritzeinheit 40 weist am ausgangsseitigen Ende eine Einspritzdüse 49 auf, die mit einer Formhälfte des Spritzgießwerkzeugs 50 verbunden ist. Der Schmelzeeinlass ist zum einen möglichst weit von der Einspritzdüse 49 entfernt, so dass ein möglichst großer Teil der Schnecke der Einspritzeinheit 40 für die Schmelzedurchmischung genutzt werden kann. Zum anderen ist von dem Schmelzeinlass 48 ein gewisser Abstand zu der Einfüllöffnung 42 vorgesehen, dass ein Materialrückfluss in Richtung der Einfüllöffnung 42 verhindert werden kann. Diese Entfernung von dem Schmelzeeinlass zu der Einfüllöffnung 42 beträgt zumindest einen Schneckengang, wobei der Rückfluss v.a. bei der Einspritzschnecke in der nach vorne gefahrenen Position erfolgen kann. Bevorzugt kann der Abstand zwei Schneckengänge betragen und insbesondere drei Schneckengänge. Da durch die Einfüllöffnung 42 eine Entgasung stattfinden kann, sollte der Abstand nicht zu groß gewählt werden. Zur Entgasung kann an der Einfüllöffnung 42 ein Vakuum angelegt werden.

Der Innendurchmesser der Rohrverbindung 35 und somit auch des Schmelzeeinlasses 48 ist so bemessen, dass die Einspritzeinheit ausschließlich über den Extruder befüllbar ist. So kann bspw. bei einer Auslegung des Compounders mit gleichen Drehzahlen und gleichen Windungssteigung von beiden Schnecken dieser Innendurchmesser identisch zum Schmelzequerschnitt innerhalb der Einspritzeinheit sein. Der Schmelzequerschnitt ist dabei als die Fläche des Innendurchmessers des Einspritzgehäuses 41 abzüglich dem Querschnitt der Einspritzschnecke 40 definiert.

Bei der Verwendung des Spritzgießcompounders werden dem Extruder 20 über die Einfüllöffnung 22 ein oder mehrere Kunststoffmaterialien zugeführt und in ihm über eine Erwärmung geschmolzen und gemischt. Neben der einen gezeigten Einfüllöffnung 22 können weitere Einfüllöffnungen (nicht dargestellt) vorgesehen sein.

Die Kunststoffschmelze verlässt den Extruder an dem Extruderauslass 28 und wird über die Rohrverbindung 35 in die Einspritzeinheit gefördert. Das in die Rohrleitung integrierte Ventil 30, ist in eine geschlossene Stellung bringbar, in der der Ausfluss der Schmelze aus dem Extruder verhindert wird. So kann zu Beginn des Verarbeitungsprozesses das Ventil 30 zunächst geschlossen sein, bis das Kunststoffmaterial im Extruder ausreichend erhitzt und homogenisiert ist. Kunststoff mit unzureichenden Eigenschaften kann in der ablassenden Stellung des Ventils an die Umgebung abgegeben werden. Das Ventil ist bevorzugt ein gesteuertes Ventil, das über einen Antrieb, wie einem elektrischen, pneumatischen oder hydraulischen Antrieb in eine Sollposition bringbar ist. Das Ventil dient neben Sicherheitsaspekten auch einer raschen und sauberen Umstellung von einem Material zu einem nächsten. Material, welches beim Anlaufen des Compounders ggf. zu lange im Extruder 20 befindlich war und so degeneriert sein könnte, oder bei einer Materialumstellung vermischt ist, kann über die Öffnungsstellung des Ventils nach außen abgeleitet werden.

Der Schmelzeeinlass 48 ist in dem von der Einspritzdüse 49 entfernten Bereich der Einspritzeinheit 40 vorgesehen, so dass die Schmelze, die über den Schmelzeeinlass in die Einspritzeinheit 40 eingeleitet wird, auf dem Weg zur Einspritzdüse 49 entlang einem beträchtlichen Teil der Einspritzschnecke 44 geleitet und auf diesem Weg weiter homogenisiert wird. Insbesondere ist es möglich, von dem äußeren Ende der Einspritzdüse in axialer Richtung der Einspritzeinheit bis zu dem von der Einspritzdüse 49 entfernten Ende der Windungen der Einspritzschnecke 44 eine Wirklänge h zu definieren. Die Einspritzschnecke 44, die eine Schubschnecke ist, ist innerhalb des Einspritzgehäuses axial verschiebbar und die Wirklänge h wird im zurückgefahrenen Zustand, also in der von der Einspritzdüse 49 entfernten Lage definiert. Die Lage des Schmelzeeinlasses ist bevorzugt im Bereich von 0,85 h +/- 0,15 h von der Einspritzdüse entfernt. Auch kann der Schmelzeeinlass weiter von der Einspritzdüse entfernt sein als das entfernte Ende der Schneckenwindungen. Im diesem Fall wird die Schmelze über die gesamte Länge der Windungen der Einspritzschnecke 44 geleitet und die bestmögliche einspritzeinheitsseitige Durchmischung der Schmelze erreicht.

Wenn der Schmelzeeinlass zumindest zu 1/3 h von der Einspritzdüse entfernt ist, ergibt sich bereits eine nennenswerte zusätzliche Durchmischung der Schmelze in der Einspritzeinheit 40. Der Spritzgießcompounder kann als Einspritzeinheit 40 eine handelsübliche Spritzgußeinheit aufweisen, die um den Schmelzeeinlass 48 erweitert wurde und ferner eine (oder mehrere) Einfüllöffnung(en) 42 für das Kunststoffgranulat aufweisen. Diese Einfüllöffung(en) 42 werden bei der Verwendung der Spritzgußeinheit als Spritzgießcompounder bei der zunächst beschriebenen Ausführungsform des Spritzgießcompounders nicht benötigt und verwendet.

Da es sich bei Einspritzschnecken häufig um 3-Zonen-Schnecken handelt, haben sie eine Einzugszone, die ca. 50% der Schneckenlänge ausmacht, an die sich die Kompressions- und Meteringzone (je 25%) anschließt. Durch die beschriebene Lage des Schmelzeinlasses, wird die Schmelze der Schnecke im Niederdruckbereich zugeführt und bevorzugt die Schmelze entlang der gesamten Kompressions- und Meteringzone geleitet.

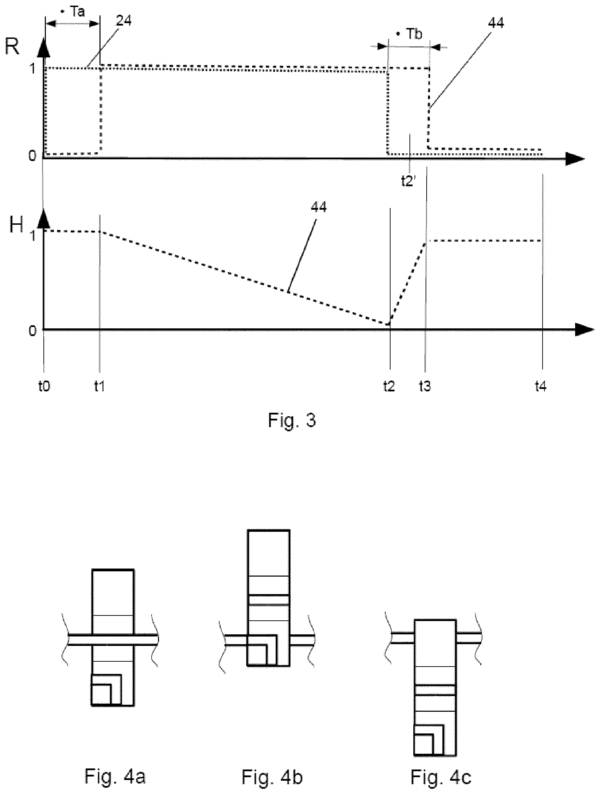

Der zeitliche Ablauf eines Spritzgußzykluses ergibt sich aus Fig. 3. Dort ist im oberen Bereich der Drehantrieb R sowohl von der Extruderschnecke 24 (in gepunkteter Linie) und der Einspritzschnecke 44 (in gestrichelter Linie) gezeigt. Der Wert "0" bedeutet, dass der entsprechende Antrieb ausgeschaltet ist und "1" bedeutet, dass der Antrieb eingeschaltet ist, wobei dies aber nicht bedeutet, dass die Antriebe mit der gleichen Drehgeschwindigkeit betrieben werden müssen. Der untere Bereich der Fig. 3 zeigt den Hub der Einspritzschnecke, wobei der Wert "1" bedeutet, dass die Einspritzschnecke 44 sich in ihrer vorderen Stellung, wie bspw. unmittelbar nach dem Einspritzvorgang, befindet und bei dem Wert "0" befindet sich die Einspritzschnecke in der zurückgefahrenen Stellung, bei der sich zwischen dem vorderen Ende der Schnecke und der Einspritzdüse 49 ein Volumen für die einzuspritzende Schmelze ergibt.

Zu Beginn des Einspritzzyklus wird zunächst die Extruderschnecke 24 zu dem Zeitpunkt t0 gestartet und im Extruder wird die Schmelze hergestellt, durchmischt und homogenisiert. Zu diesem Zeitpunkt kann das Ventil 30 geschlossen sein. Sobald eine gewisse homogene Schmelzemenge hergestellt wurde, kann zum Zeitpunkt t1 das Ventil 30 auf die durchlassende Stellung gebracht werden, so dass die Schmelze in die Einspritzeinheit 40 abgegeben werden kann. Zu diesem Zeitpunkt wird der Antrieb der Einspritzschnecke 44 gestartet, so dass sich ein zeitlicher Versatz der Einschaltzeitpunkte ΔTa beider Schnecken ergibt. Die Einspritzschnecke befindet sich dabei in ihrer vorderen Position.

In der Zeitspanne von t1 bis t2 werden sowohl die Extruder- und Einspritzschnecke angetrieben und Schmelze wird erzeugt und dabei wird die Einspritzschnecke 44 in die zurückgefahrende Position gebracht und die Schmelze sammelt sich für den nächsten Einspritzvorgang vor der Einspritzschnecke 44. Zum Zeitpunkt t2 wurde eine ausreichende Schmelzemenge für die im Zeitbereich von t2 bis t3 stattfindende Einspritzbewegung erzeugt. Zum Zeitpunkt t2 wird die Extruderschnecke 24 gestoppt und der Hubantrieb 143 der Einspritzeinheit 40 aktiviert. Zum Zeitpunkt t3 hat sich die Einspritzschnecke in ihre vordere Position vorgeschoben und das Einspritzen des Kunststoffs in die Spritzgießform ist beendet, so dass der Drehantrieb der Einspritzschnecke 44 gestoppt werden kann. So besteht ein zeitlicher Versatz von ΔTb zwischen dem Ausschalten der beiden Drehantriebe.

Es ist nicht zwingend, dass, wie oben beschrieben, das Abschalten des Drehantriebs der Extruderschnecke zeitgleich mit dem Einschalten des Hubantriebs der Einspritzschnecke 44 stattfindet, sondern alternativ kann die Extruderschnecke erst zum Zeitpunkt t2' ausgeschaltet werden, so dass im Zeitraum t2 bis t2' gleichzeitig der Hubantrieb der Einspritzschnecke 44 und der Drehantrieb der Extruderschnecke aktiviert sind und während dem Einspritzvorgang des Kunststoffs in das Werkzeug weiter Schmelze in die Einspritzeinheit gefördert wird. Dies ist deshalb möglich, da der Schmelzeeinlass 48 im hinteren, also von der Einspritzdüse entfernten Bereich der Einspritzeinheit vorgesehen ist und dort ein niedrigerer Druck herrscht als im vorderen Bereich.

Zum Zeitpunkt t3 ist der Einspritzvorgang beendet und die Drehantriebe der Einspritzschnecke 44 und der Extruderschnecke sind während der Aushärte- und Abkühlzeit der Schmelze in der Spritzgießform ausgeschaltet. Zum Zeitpunkt t4 wird das geformte Kunststoffwerkstück aus der Form entnommen. Zum Zeitpunkt t4 kann der nächste Spritzgießzyklus beginnen, so dass der Zeitpunkt t4 identisch zu t0 des nächsten Zyklus ist. Alternativ kann bereits während der Abkühlzeit, also dem Bereich von t3 bis t4 die Extruderschnecke 24 wieder aktiviert werden und Schmelze für den nächsten Zyklus herstellen und dadurch die Zyklusdauer reduzieren. Zusätzlich wird bevorzugt in der Zeitspanne t3 bis t4 über den Hub der Einspritzschnecke ein Nachdruck zum Ausgleich der Schwindung des eingespritzten Kunststoffs aufgebracht.

Der Spritzgießcompounder eignet sich insbesondere für Einsatzgebiete, bei denen unterschiedliche Werkstoffe miteinander gemischt werden sollen. Da die Durchmischung sowohl in dem Extruder als auch in der Einspritzeinheit stattfindet, wird die jeweilige Verweil- und Durchmischungsdauer und deren Umfang in beiden dieser Einheiten reduziert und insgesamt wird bei einer guten Durchmischung die thermische und mechanische Belastung für die Werkstoffe reduziert.

Als Materialien eignen sich bspw. eine Mischung von Polycarbonat (PC) und Acrylnitril-Budadien-Styrol (ABS), die sehr empfindlich gegen langen Temperatureinfluss und hohe Temperaturen ist. Auch kann Polypropylen (PP) mit bspw. 20% Talkum verwendet werden. Durch die Zugabe von Glasfasern oder anderen Fasern kann die Schlagzähigkeit erhöht werden. Durch die verkürzte Verweildauer der Schmelze in jeder dieser Einheiten wird die mechanische Belastung auf die Fasern reduziert und ein Brechen der Fasern reduziert und somit die Festigkeit des hergestellten Formstücks erhöht. Bei einem reaktiven Compoundieren kann durch die Zugabe von Peroxidvernetzern zu einem Polyethylen PE ein stabiles (Leichtbau-)Material hergestellt werden. Als Fasern kommen diverse Arten von Fasern in Betracht, wie Glasfasern, Kohlefasern oder Naturfasern. Bei herkömmlich bekannten allein stehenden Spritzgießmaschinen beträgt die übliche mittlere Verweilzeit des Kunststoffs bei 2 bis 6 Minuten und die kombinierte Gesamtverweilzeit in dem Spritzgießcompounder kann aufgrund der besseren Durchmischung innerhalb des Extruders reduziert werden. Zu lange Verweilzeiten können eine thermische und thermo-oxidative Materialschädigung verursachen.

Zu weniger als 20% wird üblicherweise die zum Schmelzen benötigte Energie über die Wärmebänder (nicht dargestellt) eingeleitet, sondern vielmehr über die Energie des Schneckenantriebs und der Reibung/Scherung in der Schmelze. Über den zweitstufigen Prozess der Herstellung der homogenen Schmelze erhält man eine Vielzahl von einstellbaren Betriebsparametern zur Erzielung einer guten Durchmischung bei einer kurzen Gesamtverweilzeit. Auch besteht bei einigen Kunststoffen, wie bspw. Polyamiden oder POM-Werkstoffen die Neigung, dass in der Kompressionszone einer Einspritzschnecke nicht ausreichend Energie zugeführt wird, so dass sich bei herkömmlichen Verfahren in der Einspritzschnecke ein Verschleiß verursachender Feststoffkeil bilden kann.

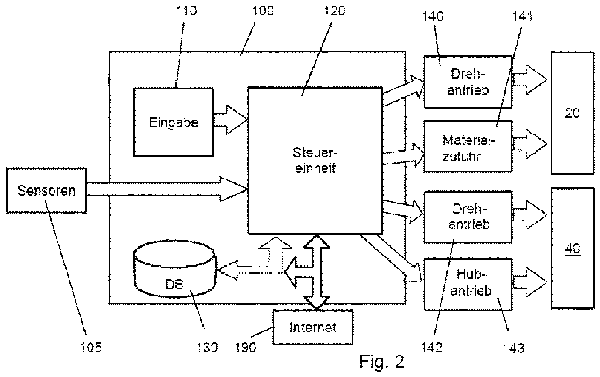

Im Folgenden wird auf die in Fig. 2 dargestellte Steuerung des Spritzgießcompounders 1 näher eingegangen. Der Spritzgießcompounder umfasst eine Computereinheit bzw. eine speicherprogrammierbare Steuerung SPS 100 oder ist mit ihr verbunden. Die Computereinheit 100 umfasst eine Steuereinheit 120, die über ein Eingabemodul 110, welches mit einer Tastatur und einem Kontrollbildschirm versehen ist, über diverse Sensoren 105 und/oder über ein Speichermodul 130 unterschiedliche Eingabewerte erhält und daraus Sollwerte für den Drehantrieb 140 des Extruders 20 und den Drehantrieb 142 und den Hubantrieb 143 der Einspritzeinheit 40 bestimmt. Auf weitere vorhandene Sollwertgeber wie bspw. für die Temperatursteuerung oder die Materialzufuhr für den Extruder wird aus Gründern der Kürze und Übersichtlichkeit nicht näher eingegangen. Über das Eingabemodul 110 können direkt Vorgaben für den Betrieb des Spritzgießcompounders und insbesondere das Ein- und Ausschalten der Antriebe 140, 142 oder 143 eingegeben werden. Die Sensoren können als eine Überwachungseinheit ein Verstopfen der Einfüllöffnungen oder Vorboten hiervon erkennen und melden und den Compounder entsprechend steuern.

Der Extruder 20 ist mit einer Unterfütterung betreibbar. Bei dieser unterfütterten Betriebsweise gibt die Materialzuführung 141, also die Dosiereinrichtung des Extruders, den Durchsatz des Extruders dadurch vor, dass sie den Materialeintrag über den Trichter 22 mit einem Fütterungsventil (nicht dargestellt) begrenzt. Diese Betriebsweise unterscheidet sich von der überfütterten Betriebsweise, bei der "mit vollem Trichter" gespeist wird. Bei der Unterfütterung ist der unmittelbare Zusammenhang zwischen Extruderschneckendrehzahl und Durchsatz aufgehoben. Hierdurch wird es möglich, über die Extruderschneckendrehzahl die Aufbereitung, also z.B. die Homogenisierung des Materials im Extruder zu steuern. Um Lufteinschlüsse im gespritzten Produkt zu vermeiden werden Einspritzeinheiten i.d.R. nicht unterfüttert betrieben. In dieser beschriebenen Betriebsweise des Einspritzcompounders lassen sich also beide Vorteile kombinieren.

Bei dem Zuführen von Material an den Extruder kann eine Materialsorte bzw. aus einem Trichter 22 zugefördert werden, oder es können mehrere Dosierstationen vorgesehen sein, die koordiniert betrieben werden, so dass beim Einfüllen in den Extruder eine Mischung erstellt wird, oder einem oder mehreren Kunststoffwerkstoffen ein Additiv, wie z.B. ein Farbstoff oder Verstärkungsfasern, zugemischt werden.

Ferner kann die Steuereinheit 120 in Abhängigkeit der gemessenen Zustände, wie z.B. Füllgrad der Einspritzeinheit 40 oder einer zeitlichen Steuerung die Materialzufuhr 141 regeln. Hierbei ist allerdings die Totzeit, also die Verzögerung von der Regelung zu der Veränderung des Materialflusses in die Einspritzeinheit 40 zu beachten, so dass alternativ und/oder zusätzlich eine Regelung des Drehantriebs 140 der Extrudereinheit 20 zur Erhöhung der Fördermenge in die Einspritzeinheit genutzt werden kann.

Die Steuereinheit 120 ist eingerichtet den Drehantrieb 140 des Extruders innerhalb von 3 Sekunden (oder max. 5s) auf die Nenndrehzahl zu regeln. Dies ist ein beschleunigtes Anfahren im Vergleich zu herkömmlich verwendeten Anfahrrampen von ca. 10s. Die Abfahrrampe, also das Abbremsen des Extruders zum Stillstand, hat die gleichen Werte oder geringere. Diese Zeiten können nach einer Ausführungsform insbesondere bei einer Zykluszeit von ca. 30s eines Einspritzvorgangs genutzt werden.

Auch kann das Speichermodul 130 eine Datenbank aufweisen, die in Abhängigkeit von unterschiedlichen Materialien oder Materialkombinationen Erfahrungswerte für die Steuerung des Spritzgießcompounders aufweist. Die Erfahrungswerte können beispielsweise Daten umfassen, dass bei einer ersten Materialzusammensetzung A die Viskosität niedriger ist, als bei einer anderen Materialzusammensetzung B und hieraus veränderte zeitliche Vorgaben für die Antriebe enthalten. So kann bei einer niedrigeren Viskosität bspw. besser auch während des Einspritzvorgangs weiteres Material in die Einspritzeinheit eingeleitet werden und somit die Zeitspanne t2 bis t2' größer gewählt werden als bei einer weniger viskosen Materialzusammensetzung. Entsprechend werden für unterschiedliche Materialzusammensetzungen insbesondere die Zeiten t1, t2 oder t3 in einer Datenbank abgelegt. Alternativ und/oder zusätzlich können aus den Werten, die in der Datenbank abgelegt sind, in Abhängigkeit von unterschiedlichen Systemvariablen wie der Größe, der Bauart oder dem Fördervolumen des Extruders oder der Einspritzeinheit, der gewünschten oder benötigten Temperaturverläufe oder der Größe/Masse des zu erzeugenden Spritzgussteils die Betriebsparameter des Spritzgießcompounders berechnet werden.

Die Steuereinheit weist bevorzugt auch eine Speicherfunktion auf zum Speichern von Betriebsparametern in der Datenbank, so dass der Anwender über das Eingabemodul 110 Werte eingeben und diese zu einem späteren Zeitpunkt zur Steuerung des Spritzgießcompounders wieder abrufen kann.

Die Computereinheit 100 kann als allein stehende Steuerung sowohl die Einspritzeinheit 40 und den Extruder antreiben und steuern. Alternativ kann hierfür auch eine an der Einspritzeinheit 40 oder der Extrudereinheit 20 bereits vorhandene Steuerung genutzt werden, die Sollwerte für die jeweils andere Einheit 40, 20 erzeugt.

Ferner besteht von der Steuereinheit 120 eine Verbindung mit dem Internet 190. Zum einen ist es möglich, über diese Verbindung eine Fernwartung des Spritzgießcompounders vorzunehmen, also Parameter über den Betriebszustand auszulesen und an eine zentrale Kontrollstelle zu übertragen, dort auszuwerten und neue Sollwerte und Steuerbedingungen oder -algorithmen an die Steuereinheit zu leiten. Ferner kann an einer Stelle mit Zugang zum Internet (Webserver) eine zentrale Datenbank mit vorteilhaften Betriebsbedingungen und Maschineneinstellungen in Bezug auf spezielle Materialien oder Materialmischungen für den Spritzgießcompounder vorgesehen sein. Die Steuereinheit 120 greift auf diesen Webserver zu, liest diese vorteilhaften bzw. empfohlenen Betriebsbedingungen aus und speichert sie in der internen Datenbank 130, um sie dem Anwender in der Folge als Einstellparameter vorschlagen zu können.

Fig. 4 besteht aus den Figuren Fig. 4a, 4b und 4c, die jeweils schematisch unterschiedlichen Steuerzustände des Ventils 30, welches bevorzugt ein beheiztes 3-Wegeventil ist, zeigt. Links ist jeweils die Extruderseite und rechts die Seite der Einspritzeinheit gezeigt, so dass bei dem oben beschriebenen Fördervorgang die Schmelze von links nach rechts durch das Ventil geführt wird. Dieser Zustand ist in Fig. 4a gezeigt. Fig. 4c zeigt das Ventil in dem geschlossenen Zustand. Dieser kann während der Plasitizierphase des Kunststoffs im Extruder 20 sinnvoll sein, um in diesem Zustand, wie z.B. im Zeitraum von t0 bis t1 (siehe Fig. 3) ein Fördern von nicht ausreichend homogenisierter Schmelze zu der Einspritzeinheit 40 zu verhindern. Zum Reinigen, zum Entleeren des Extruders oder zum Materialwechsel kann das Ventil 30 in die Ablassstellung gebracht werden, die in Fig. 4b gezeigt ist. Das Ventil 30 kann somit als ein Anfahrventil verwendet werden und kann auch im Fall eines Überdrucks als ein Sicherheitsventil verwendet werden.

Insgesamt ist der Spritzgießcompounder, und insbesondere der Extruder 20, der Übergang der Rohrverbindung 35 von dem Extruder 20 zu der Einspritzeinheit 40 und die Einspritzeinheit 40 ein gegen die Außenumgebung geschlossenes System, wobei allerdings Öffnungen wie z.B. zur Entgasung vorgesehen sein können.

Die Zufuhr von den Kunststoffbestandteilen, den Additiven, den Füllstoffen und/oder den Fasern geschieht bevorzugt in dem Extruder und in der Einspritzeinheit wird der Schmelze bevorzugt kein weiterer Stoff zugeführt. In alternativen Ausführungsformen können weitere Materialien, wie z.B. Glasfasern, Naturfasern, Peroxidvernetzer, Polylactic Acid (PLA) oder weitere Kunststoffmaterialien auch über eine oder mehrere Einfüllöffnungen 42 der Einspritzeinheit zugegeben werden. Letzteres ist insbesondere dann vorteilhaft, wenn die zugegebenen Materialien (temperatur-)empfindlich sind und eine mögliche Schädigung in Extruder vermieden werden soll.

Der in der vorstehenden beispielhaften Ausführungsform beschriebene Extruder ist ein Einschneckenextruder. Es ist dem Fachmann bekannt, dass im Allgemeinen mit einem Zwei- oder Mehrschneckenextruder ein besseres Durchmischungsergebnis erzielt werden kann als mit einem Einschneckenextruder. Allerdings bewirkt der Mehrschneckenextruder auch eine höhere mechanische Belastung des Materials, was eine reduzierte Kettenlänge der Monomere (oder Polymere) oder der Fasern bewirkt und somit eine reduzierte Bauteilfestigkeit bewirken kann. Da das von dem (Einschnecken-)Extruder bewirkte Durchmischungsergebnis durch die nachgeschaltete Durchleitung der Schmelze durch die Einspritzeinheit weiter erhöht wird, kann mit dem (Einschnecken)-Extruder eine höhere Bauteilqualität als mit einem Mehr- (bspw. Zwei-) -schneckenextruder erzielt werden.

Andererseits kann in alternativen Ausführungsformen auch ein Mehrschneckenextruder verwendet werden und das dort erzielte Ergebnis der Durchmischung in der nachgeschalteten Einspritzeinheit weiter erhöht werden.

Die Längsausrichtung des Extruders liegt gemäß Fig. 1 in einem 90° Winkel zu der Einspritzeinheit. Somit wird die Schmelze bei dem Einlassventil im Übergang in die Längsrichtung der Einspritzeinheit um 90° umgelenkt und der Materialfluss der Schmelze wird verwirbelt und es wird eine materialschonende Verbesserung der Durchmischung erzielt. Durch eine weitere (nicht dargestellte) Umlenkung des Schmelzestroms kann die Durchmischung weiter erhöht werden. So kann bspw. der Extruder parallel versetzt zu der Einspritzeinheit ausgerichtet sein, so dass die Rohrverbindung, die mit dem Extruderauslass verbunden ist, zunächst einmal in Richtung des Schmelzeeinlass 48 umgelenkt wird und der Schmelzestrom nachfolgend in der Einspritzeinheit ein zweites Mal umgelenkt wird. Ein vergleichbares Ergebnis kann erlangt werden, wenn der Extruder senkrecht zu Einspritzeinheit und mit einem Höhenversatz zu ihr angeordnet ist.

## Patentansprüche

1. Spritzgießcompounder (1) aufweisend:
einen Extruder (20) mit zumindest einer in einem Extrudergehäuse (21) angeordneten Extruderschnecke (24),
eine Einspritzeinheit (40) mit einer in einem Einspritzgehäuse (41) angeordneten Einspritzschnecke (44), wobei
die Einspritzeinheit (40) eine von der Einspritzdüse (49) der Einspritzeinheit bis zu dem davon entfernten Ende der Windungen der Einspritzschnecke (24) definierte Wirklänge (h) aufweist, **dadurch gekennzeichnet, dass**
am Einspritzgehäuse (41) ein Schmelzeeinlass (48) vorgesehen ist, der mit einem Auslass (28) des Extruders (20) verbunden ist, wobei der Schmelzeeinlass (48) weiter als ein Drittel der Wirklänge (h) von der Einspritzdüse (49) entfernt ist, und wobei zwischen dem Auslass (28) des Extruders (20) und dem Schmelzeeinlass (48) der Einspritzeinheit (40) ein Ventil angeordnet ist,
wobei das Ventil ein Dreiwegeventil ist, welches alternativ die Schmelze in die Einspritzeinheit leitet oder an die Umgebung auslässt, und welches zusätzlich den Zustand des geschlossenen Ventils umfasst.

2. Spritzgießcompounder (1) gemäß Anspruch 1, **dadurch gekennzeichnet, dass** es sich bei dem Ventil um ein Überdruckventil oder ein steuerbares Ventil handelt.

3. Spritzgießcompounder (1) gemäß Anspruch 1 oder 2, wobei der Extruder (20) exakt eine Extruderschnecke (24) aufweist.

4. Spritzgießcompounder gemäß einem der vorangegangenen Ansprüche, **dadurch gekennzeichnet, dass** der Schmelzeeinlass (48) weiter als die Hälfte der Wirklänge (h) von der Einspritzdüse (49) und bevorzugt weiter als zwei Drittel der Wirklänge (h) von der Einspritzdüse (49) entfernt ist.

5. Spritzgießcompounder (1) gemäß einem der vorangegangenen Ansprüche, ferner aufweisend eine Steuerung (120), die eingerichtet ist, den Antrieb (140) der Extruderschnecke (24) in Abhängigkeit von der Zyklusphase eines Einspritzvorgangs ein- und auszuschalten, wobei insbesondere innerhalb des Zyklus des Einspritzvorgangs eine Zeitspanne des aktivierten Antriebs (140) der Extruderschnecke (24) und eine Zeitspanne des nicht-aktivierten Antriebs der Extruderschnecke vorgesehen ist.

6. Spritzgießcompounder gemäß einem der vorangegangenen Ansprüche, wobei eine Steuerung vorgesehen ist, um den Antrieb der Extruderschnecke (24) in Abhängigkeit von einem vorgegebenen Zeitpunkt innerhalb der Zyklusphase eines Einspritzvorgangs und/oder dem Füllgrad der Einspritzeinheit ein- und auszuschalten oder zu steuern oder zu regeln, wobei vorzugsweise die Steuerung eingerichtet ist, den von dem Extruders (20) geförderten Volumenstrom der Schmelze an die Einspritzeinheit (40) in Abhängigkeit von einer Abweichung eines einspritzphasenabhängig vorgegebenen Soll-Füllgrades der Einspritzeinheit (40) zu einem gemessenen Ist-Füllgrad der Einspritzeinheit (40) zu regeln.

7. Spritzgießcompounder gemäß einem der vorangegangenen Ansprüche, wobei die Steuerung eingerichtet ist, die Materialzufuhr in den Extruder (20) unterfüttert zu steuern oder zu regeln, wobei insbesondere für die Steuerung Messwerte des Füllzustands der Einspritzeinheit (40) vorgesehen sind.

8. Spritzgießcompounder gemäß einem der vorangegangenen Ansprüche, aufweisend eine Steuerung (120), die eingerichtet ist, den Drehantrieb (142) der Einspritzschnecke (44) und den Drehantrieb (140) der Extruderschnecke (24) ein- und auszuschalten, wobei für das Einschalten des Drehantriebs (140) der Extruderschnecke (24) ein zeitlicher Vorlauf (ΔTa) oder eine Verzögerung oder eine Gleichzeitigkeit gegenüber dem Einschalten des Drehantriebs (142) der Einspritzschnecke (44) oder gegenüber dem Einspritzhub der Einspritzschnecke (44) vorgesehen ist und insbesondere für das Ausschalten des Drehantriebs der Extruderschnecke (24) ein zeitlicher Vorlauf (ΔTb) oder eine Verzögerung oder eine Gleichzeitigkeit gegenüber dem Ausschalten des Antriebs (142) der Einspritzschnecke (44) vorgesehen ist.

9. Spritzgießcompounder gemäß Anspruch 5 oder 6 mit einem Eingabe- (110) und/oder einem Speichermodul (130) zur Eingabe und/oder zur Speicherung von Betriebsparametern für die Antriebe (140, 142,143) der Einspritzschnecke (44) und der Extruderschnecke (24), so dass Einspritzschnecke (44) und die Extuderschnecke (24) in Abhängigkeit von unterschiedlichen Werkstoffen oder Werkstoffkombinationen der Schmelze innerhalb eines Einspritzzyklus mit einem zeitlichen Versatz oder synchron zueinander betreibbar sind.

10. Spritzgießcompounder gemäß einem der vorangegangenen Ansprüche, wobei der Ausgang des Extruders (20) über eine druck- oder schmelzendichte Rohrverbindung mit dem Schmelzeeinlass (48) der Einspritzeinheit (40) verbunden ist, und/oder wobei
der Extruder (20) eingerichtet ist, durch die Extruderschnecke (24) Kunststoffschmelze zu der Einspritzeinheit (40) zu fördern und wobei insbesondere hierfür keine weiteren Elemente zur Förderung, wie Kolben, Pumpen, Schnecken, der Nutzung der Schwerkraft oder dergleichen vorgesehen sind.

11. Spritzgießcompounder gemäß einem der vorangegangenen Ansprüche, wobei die Dauer eines Zyklus der Einspritzvorgänge in beliebig viele Zeitpunkte oder Zeitspannen unterteilbar ist, wobei bei der Steuerung (120) des Spritzgießcompounders eingerichtet ist, dass zu jedem dieser Zeitpunkte der Volumenstrom der Rohrverbindung (35) an jeder seiner Stellen zwischen dem Ausgang des Extruders und der Einspritzeinheit konstant ist.

12. Verfahren zur Herstellung eines Spritzgusswerkstücks mit einem Spritzgießcompounder nach einem der vorstehenden Ansprüche, mit:
dem Zuführen von einem oder mehreren Spritzgussmaterial(ien) zu einem Extruder,
dem Herstellen einer Schmelze durch das Schmelzen und/oder das Mischen von dem einen oder den mehreren Spritzgussmaterial(-ein) in dem Extruder,
dem Zuführen der Schmelze durch eine Einlassöffnung einer Einspritzeinheit in die Einspritzeinheit,
dem Leiten der Schmelze in der Einspritzeinheit (40) in Richtung zu einer mit einem Spritzgusswerkzeug (50) verbundenen Einspritzdüse (49), wobei eine Einspritzschnecke (44) der Einspritzeinheit (40) eine über die axiale Länge der Windungen der Einspritzschnecke definierte Windungslänge (w) aufweist und die Einlassöffnung (48) derart an der Einspritzeinheit (40) angeordnet ist, dass die Schmelze zumindest über ein Drittel der Windungslänge (w) entlang den Windungen der Einspritzschnecke (44) geleitet wird.

## Claims

1. Injection moulding compounder (1), comprising:
an extruder (20) having at least one extruder screw (24) arranged in an extruder housing (21),
an injection unit (40) having an injection screw (44) arranged in an injection housing (41), wherein
the injection unit (40) has a defined effective length (h) from the injection nozzle (49) of the injection unit to an end of the windings of the injection screw (24) remote therefrom, **characterised in that**
a melt inlet (48) is provided on the injection housing (41), which inlet is connected to an outlet (28) of the extruder (20), wherein the melt inlet (48) is further than one third of the effective length (h) from the injection nozzle (49), and wherein a valve is arranged between the outlet (28) of the extruder (20) and the melt inlet (48) of the injection unit (40),
wherein the valve is a three-way valve, which alternately conducts the melt into the injection unit or discharges it to the surroundings, and which additionally includes the state of the closed valve.

2. Injection moulding compounder (1) according to claim 1, **characterised in that** the valve is a pressure relief valve or a controllable valve.

3. Injection moulding compounder (1) according to claim 1 or 2, wherein the extruder (20) comprises exactly one extruder screw (24).

4. Injection moulding compounder according to any of the preceding claims, **characterised in that** the melt inlet (48) is further than half the effective length (h) from the injection nozzle (49) and preferably further than two-thirds of the effective length (h) from the injection nozzle (49).

5. Injection moulding compounder (1) according to any of the preceding claims, further comprising a controller (120) which is configured to switch the drive (140) of the extruder screw (24) on and off depending on the cycle phase of an injection process, wherein in particular within the cycle of the injection process a time period of the activated drive (140) of the extruder screw (24) and a time period of the non-activated drive of the extruder screw is provided.

6. Injection moulding compounder according to any of the preceding claims, wherein a controller is provided in order to switch the drive of the extruder screw (24) on and off, or to control or to regulate said drive, depending on a predetermined time point within the cycle phase, wherein the controller is preferably configured to regulate the volume flow of the melt conveyed from the extruder (20) to the injection unit (40), depending on a deviation of an injection phase-dependent predetermined target filling level of the injection unit (40) to a measured actual filling level of the injection unit (40).

7. Injection moulding compounder according to any of the preceding claims, wherein the controller is configured to control or regulate the material feed into the extruder (20) in a shimmed manner, wherein in particular measured values of the filling level of the injection unit (40) are provided for the controller.

8. Injection moulding compounder according to any of the preceding claims, comprising a controller (120) which is configured to switch the rotary drive (142) of the injection screw (44) and the rotary drive (140) of the extruder screw (24) on and off, wherein for switching on the rotary drive (140) of the extruder screw (24) a lead time (ΔTa) or a delay or simultaneity with respect to the switching on of the rotary drive (142) of the injection screw (44) or with respect to the injection stroke of the injection screw (44) is provided, and in particular for switching off the rotary drive of the extruder screw (24) a lead time (ΔTb) or a delay or simultaneity with respect to the switching off of the drive (142) of the injection screw (44) is provided.

9. Injection moulding compounder according to claim 5 or 6, comprising an input (110) and/or storage module (130) for inputting and/or for storing operating parameters for the drives (140, 142, 143) of the injection screw (44) and of the extruder screw (24), such that the injection screw (44) and the extruder screw (24) are operable having a temporal offset or synchronously with respect to one another, depending on different materials or material combinations of the melt, within an injection cycle.

10. Injection moulding compounder according to any of the preceding claims,
wherein the outlet of the extruder (20) is connected to the melt inlet (48) of the injection unit (40) by means of a pressure-tight or melt-proof pipe connection, and/or wherein
the extruder (20) is configured to convey plastics melt to the injection unit (40), and wherein in particular no further elements for conveying, such as pistons, pumps, screws, the use of gravity, or the like, are provided for this purpose.

11. Injection moulding compounder according to any of the preceding claims, wherein the duration of a cycle of the injection processes can be divided in to any desired number of time points or time periods, wherein the controller (120) of the injection moulding compounder is configured such that, at least of said time points, the volume flow of the pipe connection (35), at each of its points between the output of the extruder and the injection unit, is constant.

12. Method for producing an injection moulding workpiece with an injection moulding compounder according to any of the preceding claims, comprising:
feeding one or more injection moulding material(s) to an extruder,
producing a melt by melting and/or mixing the one or more injection moulding material(s) in the extruder,
feeding the melt through an inlet opening of an injection unit into the injection unit,
conducting the melt in the injection unit (40) in the direction of an injection nozzle (49) connected to an injection mould (50), wherein an injection screw (44) of the injection unit (40) has a winding length (w) defined by the axial length of the windings of the injection screw, and the inlet opening (48) is arranged on the injection unit (40) such that the melt is conducted along the windings of the injection screw (44) at least over one-third of the winding length (w).

## Revendications

1. Mélangeur pour moulage par injection (1) présentant :
une extrudeuse (20) avec au moins une vis sans fin d'extrudeuse (24) disposée dans un boîtier d'extrudeuse (21),
une unité d'injection (40) avec une vis sans fin d'injection (44) disposée dans un boîtier d'injection (41), dans lequel
l'unité d'injection (40) présente une longueur opérationnelle (h) définie depuis la buse d'injection (49) de l'unité d'injection jusqu'à l'extrémité, située à distance de celle-ci, des spires de la vis sans fin d'injection (24), **caractérisé en ce que**
est prévue sur le boîtier d'injection (41) une entrée pour matière fondue (48), qui est raccordée à une sortie (28) de l'extrudeuse (20), dans lequel l'entrée pour matière fondue (48) est située à une distance de la buse d'injection (49) qui est supérieure à un tiers de la longueur opérationnelle (h), et dans lequel une soupape est disposée entre la sortie (28) de l'extrudeuse (20) et l'entrée pour matière fondue (48) de l'unité d'injection (40),
dans lequel la soupape est une soupape à trois voies, laquelle guide en variante la matière fondue dans l'unité d'injection ou la fait sortir dans l'environnement, et laquelle comprend en supplément l'état de la soupape fermée.

2. Mélangeur pour moulage par injection (1) selon la revendication 1, **caractérisé en ce que** la soupape est une soupape de surpression ou une soupape pouvant être commandée.

3. Mélangeur pour moulage par injection (1) selon la revendication 1 ou 2, dans lequel l'extrudeuse (20) présente exactement une vis sans fin d'extrudeuse (24).

4. Mélangeur pour moulage par injection selon l'une quelconque des revendications précédentes,
**caractérisé en ce que** l'entrée pour matière fondue (48) est située à une distance de la buse d'injection (49) qui est supérieure à la moitié de la longueur opérationnelle (h) et est située de manière préférée à une distance de la buse d'injection (49) qui est supérieure à deux tiers de la longueur opérationnelle (h).

5. Mélangeur pour moulage par injection (1) selon l'une quelconque des revendications précédentes, présentant en outre une commande (120) qui est mise au point pour activer et désactiver l'entraînement (140) de la vis sans fin d'extrudeuse (24) en fonction de la phase de cycle d'une opération d'injection, dans lequel un laps de temps de l'entraînement (140) activé de la vis sans fin d'extrudeuse (24) et un laps de temps de l'entraînement non activé de la vis sans fin d'extrudeuse sont prévus en particulier à l'intérieur du cycle de l'opération d'injection.

6. Mélangeur pour moulage par injection (1) selon l'une quelconque des revendications précédentes, dans lequel une commande est prévue pour activer et désactiver ou pour commander ou pour réguler l'entraînement de la vis sans fin d'extrudeuse (24) en fonction d'un moment prédéfini à l'intérieur de la phase de cycle d'une opération d'injection et/ou du degré de remplissage de l'unité d'injection, dans lequel la commande est mise au point de préférence pour réguler le flux volumique de la matière fondue refoulé par l'extrudeuse (20) sur l'unité d'extrudeuse (40) en fonction d'un écart d'un degré de remplissage de consigne, prédéfini en fonction de la phase d'injection, de l'unité d'injection (40) par rapport à un degré de remplissage réel mesuré de l'unité d'injection (40).

7. Mélangeur pour moulage par injection selon l'une quelconque des revendications précédentes, dans lequel la commande est mise au point pour commander ou pour réguler de manière sous-alimentée l'amenée de matériau dans l'extrudeuse (20), dans lequel des valeurs de mesure de l'état de remplissage de l'unité d'injection (40) sont prévues en particulier pour la commande.

8. Mélangeur pour moulage par injection selon l'une quelconque des
revendications précédentes, présentant une commande (120), qui est mise au point pour activer et désactiver l'entraînement rotatif (142) de la vis sans fin d'injection (44) et l'entraînement rotatif (140) de la vis sans fin d'extrudeuse (24), dans lequel un départ anticipé (ΔTa) ou un retard ou une simultanéité sont prévus par rapport à l'activation de l'entraînement rotatif (142) de la vis sans fin d'injection (44) ou par rapport à la course d'injection de la vis sans fin d'injection (44) pour l'activation de l'entraînement rotatif (140) de la vis sans fin d'extrudeuse (24) et en particulier un départ anticipé (ΔTb) ou un retard ou une simultanéité sont prévus par rapport à la désactivation de l'entraînement rotatif (142) de la vis sans fin d'injection (44) pour la désactivation de l'entraînement rotatif de la vis sans fin d'extrudeuse (24).

9. Mélangeur pour moulage par injection selon la revendication 5 ou 6 avec un module d'entrée (110) et/ou un module de mémorisation (130) pour entrer et/ou pour mémoriser des paramètres de fonctionnement pour les entraînements (140, 142, 143) de la vis sans fin d'injection (44) et de la vis sans fin d'extrudeuse (24) de sorte que la vis sans fin d'injection (44) et la vis sans fin d'extrudeuse (24) peuvent fonctionner avec un décalage temporel ou de manière synchrone l'une par rapport à l'autre à l'intérieur d'un cycle d'injection en fonction de différents matériaux ou de différentes combinaisons de matériaux de la matière fondue.

10. Mélangeur pour moulage par injection selon l'une quelconque des revendications précédentes, dans lequel la sortie de l'extrudeuse (20) est raccordée à l'entrée pour matière fondue (48) de l'unité d'injection (40) par l'intermédiaire d'un raccordement tubulaire étanche à la pression ou à la matière fondue, et/ou dans lequel
l'extrudeuse (20) est mise au point pour refouler de la matière fondue synthétique vers l'unité d'injection (40) par la vis sans fin d'extrudeuse (24) et dans lequel aucun autre élément en particulier n'est prévu à cet effet pour le refoulement, comme des pistons, des pompes, des vis sans fin, pour l'utilisation de la force de gravité ou similaire.

11. Mélangeur pour moulage par injection selon l'une quelconque des revendications précédentes, dans lequel la durée d'un cycle des opérations d'injection peut être sous-divisée en de nombreux moments quelconques ou en de nombreux laps de temps, dans lequel il est prévu lors de la commande (120) du mélangeur pour moulage par injection qu'à chacun de ces moments, le flux volumique du raccordement tubulaire (35) est constant sur chacun de ses emplacements entre la sortie de l'extrudeuse et l'unité d'injection.

12. Procédé pour fabriquer une pièce moulée par injection avec un mélangeur pour moulage par injection selon l'une quelconque des revendications précédentes, avec :
l'amenée d'un ou de plusieurs matériaux pour moulage par injection à une extrudeuse,
la fabrication d'une matière fondue par la fusion et/ou le mélange d'un ou des plusieurs matériaux de moulage par injection dans l'extrudeuse,
l'amenée de la matière fondue par une ouverture d'entrée d'une unité d'injection dans l'unité d'injection,
le guidage de la matière fondue dans l'unité d'injection (40) en direction d'une buse d'injection (49) raccordée à un outil pour moulage par injection (50),
dans lequel une vis sans fin d'injection (44) de l'unité d'injection (40) présente une longueur opérationnelle (w) définie sur la longueur axiale des spires de la vis sans fin d'extrudeuse et l'ouverture d'entrée (48) est disposée de telle manière sur l'unité d'injection (40) que la matière fondue est guidée au moins sur un tiers de la longueur de spire (w) le long des spires de la vis sans fin d'injection (44).
